# EUROPEAN PATENT APPLICATION

(11) **EP 4 734 218 A1**
(43) Date of publication of application: **29.04.2026**
(21) Application number: 25209122.8
(22) Date of filing: 16.10.2025
(51) Int. Cl.: H01M 10/0587, H01M 50/107, H01M 50/538, H01M 50/545, H01M 50/547, H01M 50/559

(54) **BATTERY CELL INCLUDING CURRENT COLLECTOR PLATE AND BATTERY MODULE INCLUDING THE SAME**

(30) Priority: 25.10.2024 KR 20240147837
(71) Applicant: SK On Co., Ltd., Seoul 03161 (KR)
(72) Inventor: KWAK, Seung Ho, 34124 Daejeon (KR)
(74) Representative: Prüfer & Partner mbB Patentanwälte · Rechtsanwälte

(57) **Abstract**

A battery cell includes a can, an electrode assembly disposed within the can, and including a first electrode plate and a second electrode plate, a terminal portion mounted on the can, a first current collector plate connected to the terminal portion and the first electrode plate, and a second current collector plate connected to the can and the second electrode plate. The first electrode plate includes a first uncoated portion bonded to the first current collector plate. The second electrode plate includes a second uncoated portion bonded to the second current collector plate. The first uncoated portion is surrounded by the second uncoated portion.

## Description

### TECHNICAL FIELD

The disclosure and implementations disclosed in this patent document generally relate to a battery cell including a current collector plate and a battery module including the same.

### BACKGROUND

Unlike primary batteries, secondary batteries may be charged and discharged, making them applicable to a wide range of applications, including digital cameras, mobile phones, laptops, hybrid vehicles, electric vehicles, and energy storage systems (ESS). Secondary batteries may be lithium-ion batteries, nickel-cadmium batteries, nickel-metal hydride batteries, or nickel-hydrogen batteries.

A cell assembly including multiple battery cells may be disposed within a module housing to form a battery module.

### SUMMARY

A battery cell may include a conductive tab for collecting current. The conductive tab is bonded to the uncoated portion of the cathode plate and the uncoated portion of the anode plate, respectively, to induce current flow to the cathode and anode terminals. However, if an electrode tab is used, the resistance of the battery cell may increase.

To reduce the resistance of the battery cell, a battery cell may be used that excludes the electrode tab and includes an uncoated portion and a current collector plate bonded to the uncoated portion. However, the uncoated portion connected to the current collector plate may reduce the electrolyte impregnation efficiency of the battery cell.

The present disclosure can be implemented in some embodiments to provide a tabless battery cell with electrode tabs removed.

According to an aspect of the present disclosure, a battery cell with easy electrolyte impregnation may be provided.

The battery cell and battery module in embodiments of the present disclosure may be widely applied in green technology fields such as electric vehicles, battery charging stations, and other batterybased solar and wind power generation devices. Furthermore, the battery cell and battery module in the present disclosure may be used in ecofriendly electric vehicles and hybrid vehicles, which aim to prevent climate change by reducing air pollution and greenhouse gas emissions.

In some embodiments of the present disclosure, a battery cell includes a can, an electrode assembly disposed within the can, and including a first electrode plate and a second electrode plate, a terminal portion mounted on the can, a first current collector plate connected to the terminal portion and the first electrode plate, and a second current collector plate connected to the can and the second electrode plate. The first electrode plate includes a first uncoated portion bonded to the first current collector plate. The second electrode plate includes a second uncoated portion bonded to the second current collector plate. The first uncoated portion is surrounded by the second uncoated portion.

In a preferred embodiment, the first current collector plate and the second current collector plate may be positioned in the same direction with respect to the electrode assembly.

In a preferred embodiment, the first electrode plate may include a first end portion forming a central portion of the electrode assembly and a second end portion forming an edge portion of the electrode assembly. The second electrode plate may include a third end portion forming the central portion and a fourth end portion forming the edge portion. The first uncoated portion may be closer to the first end portion than the second end portion. The second uncoated portion may be closer to the fourth end portion than to the third end portion.

In a preferred embodiment, at least a portion of the first current collector plate may be surrounded by the second current collector plate.

In a preferred embodiment, the can may include an end portion accommodating the terminal portion and a wall portion extending from the end portion.

In a preferred embodiment, the second current collector plate may include a bend region protruding toward the end portion of the can and disposed between the first joining region and the second joining region.

In a preferred embodiment, the wall portion may include a first end region connected to the end portion of the can and a second end region opposite the first end region and forming an opening. The battery cell may further include a cap plate sealing the opening.

In a preferred embodiment, the electrode assembly may include a top portion in which the first uncoated portion and the second uncoated portion are positioned and which faces the end portion of the can, and a bottom portion opposite the top portion and facing the cap plate.

In a preferred embodiment, the battery cell may further include a sealing gasket sealing a gap between the terminal portion and the can.

In a preferred embodiment, the first uncoated portion may include a plurality of first uncoated portions, and the plurality of first uncoated portions may be joined to the first current collector plate in a folded state. The second uncoated portion may include a plurality of second uncoated portions, and the plurality of second uncoated portions may be joined to the second current collector plate in a folded state.

In a preferred embodiment, the battery cell may further include an insulator surrounding at least a portion of the terminal portion and at least partially disposed between the first current collector plate and the can.

In a preferred embodiment, the first current collector plate may include a border region bonded to the first uncoated portion and a protruding region bonded to the terminal portion.

In a preferred embodiment, the first uncoated portion and the second uncoated portion may be disposed between an end portion of the can and a mixture layer of the electrode assembly.

In some embodiments of the present disclosure, a battery module includes a cell assembly including a plurality of battery cells, a module housing accommodating the cell assembly, and a bus bar electrically connected to the plurality of battery cells. Each of the plurality of battery cells includes a can, an electrode assembly disposed within the can, and including a first electrode plate and a second electrode plate, a terminal portion mounted on the can, a first current collector plate connected to the terminal portion and the first electrode plate, and a second current collector plate connected to the can and the second electrode plate. The first electrode plate includes a first uncoated portion connected to the first current collector plate. The second electrode plate includes a second uncoated portion connected to the second current collector plate. The first uncoated portion is surrounded by the second uncoated portion.

### BRIEF DESCRIPTION OF DRAWINGS

Certain aspects, features, and advantages of the present disclosure are illustrated by the following detailed description with reference to the accompanying drawings.
FIG. 1 is a perspective view of a battery cell according to a preferred embodiment.
FIG. 2 is an exploded perspective view of a battery cell according to a preferred embodiment.
FIG. 3 is a perspective view of an electrode assembly according to a preferred embodiment.
FIG. 4 is a perspective view illustrating the interior of an electrode assembly according to a preferred embodiment.
FIG. 5 is a front view of a first electrode plate according to a preferred embodiment.
FIG. 6 is a front view of a second electrode plate according to a preferred embodiment.
FIG. 7 is a perspective view of a battery cell equipped with a current collector plate according to a preferred embodiment.
FIG. 8 is a cross-sectional view of a battery cell according to a preferred embodiment.
FIG. 9 is an enlarged view of area A of FIG. 8 according to a preferred embodiment.
FIG. 10 is an enlarged view of area B of FIG. 8 according to a preferred embodiment.
FIG. 11 is an exploded perspective view of a battery module.

### DETAILED DESCRIPTION

Features of the present disclosure disclosed in this patent document are described by example embodiments with reference to the accompanying drawings.

Hereinafter, the present disclosure will be described in detail with reference to the attached drawings. However, these are merely illustrative and the present disclosure is not limited to the detailed embodiments illustrated herein.

Detailed descriptions of well-known functions and configurations that may obscure the gist of the present disclosure are omitted. In the attached drawings, some components are exaggerated, omitted, or schematically illustrated, and the dimensions of each component do not fully reflect the actual size.

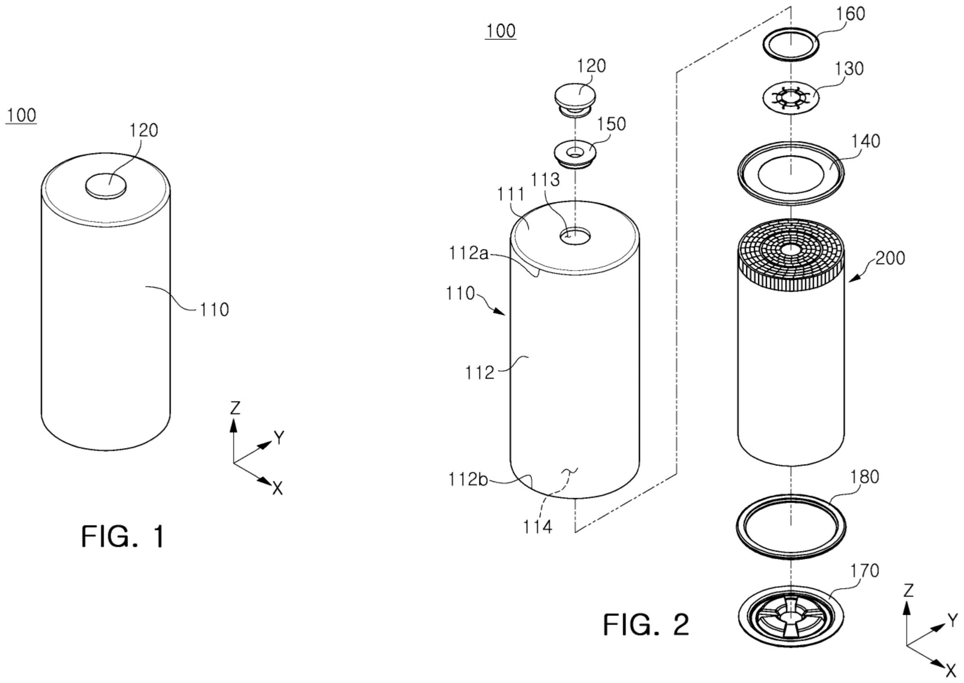

FIG. 1 is a perspective view of a battery cell according to a preferred embodiment. FIG. 2 is an exploded perspective view of a battery cell according to a preferred embodiment.

Referring to FIGS. 1 and 2, a battery cell 100 may include a can 110, a terminal portion 120, a first current collector plate 130, a second current collector plate 140, and an electrode assembly 200.

The battery cell 100 may be a secondary battery. For example, the battery cell 100 may be a lithium ion battery, but is not limited thereto. For example, the battery cell 100 may be a nickel-cadmium battery, a nickel-metal hydride battery, or a nickel-hydrogen battery capable of being charged and discharged.

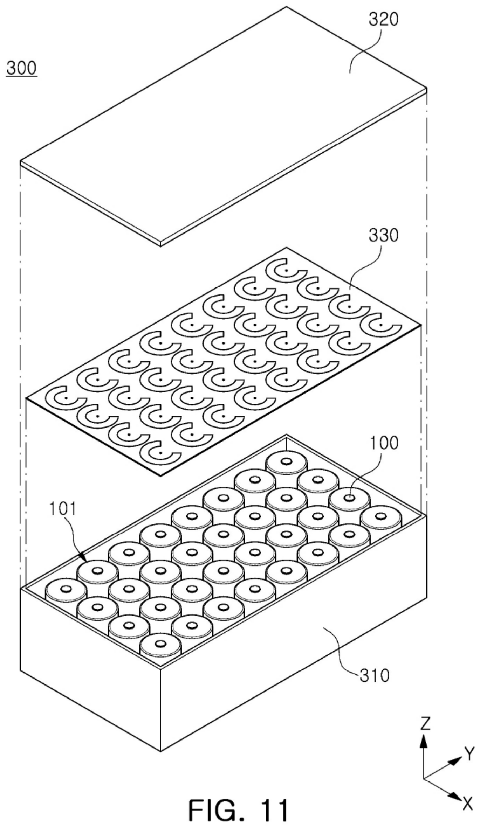

The can 110 may form at least a portion of the appearance of the battery cell 100. In a preferred embodiment, the can 110 may include an end portion 111 and a wall portion 112 extending from the end portion 111. The end portion 111 may accommodate a terminal portion 120. For example, the end portion 111 may include a through hole 113 that accommodates the terminal portion 120. The can 110 may provide an internal space that accommodates components (for example, an electrode assembly 200 and an electrolyte) of the battery cell 100. The can 110 may have a substantially cylindrical outer shape. The end portion 111 may face a bus bar (for example, a bus bar 330 of FIG. 11) that is electrically connected to the battery cell 100. The wall portion 112 may include a first end region 112a connected to the end portion 111 and a second end region 112b opposite the first end region 112a and forming an opening 114. The opening 114 may be a hollow space formed in the can 110. In a preferred embodiment, the can 110 may be referred to as a case.

The terminal portion 120 may provide a path for transmitting current to the exterior of the battery cell 100. The terminal portion 120 may be electrically connected to the electrode assembly 200. For example, the terminal portion 120 may be welded to a first current collector plate 130 connected to the electrode assembly 200. The terminal portion 120 may be joined to a busbar assembly (for example, the busbar assembly 330 of FIG. 11).

The terminal portion 120 may be mounted on the can 110. In a preferred embodiment, the terminal portion 120 may be a rivet terminal. The terminal portion 120 may be coupled to the end portion 111 of the can 110 through riveting. The terminal portion 120 may be inserted into the through hole 113 of the can 110.

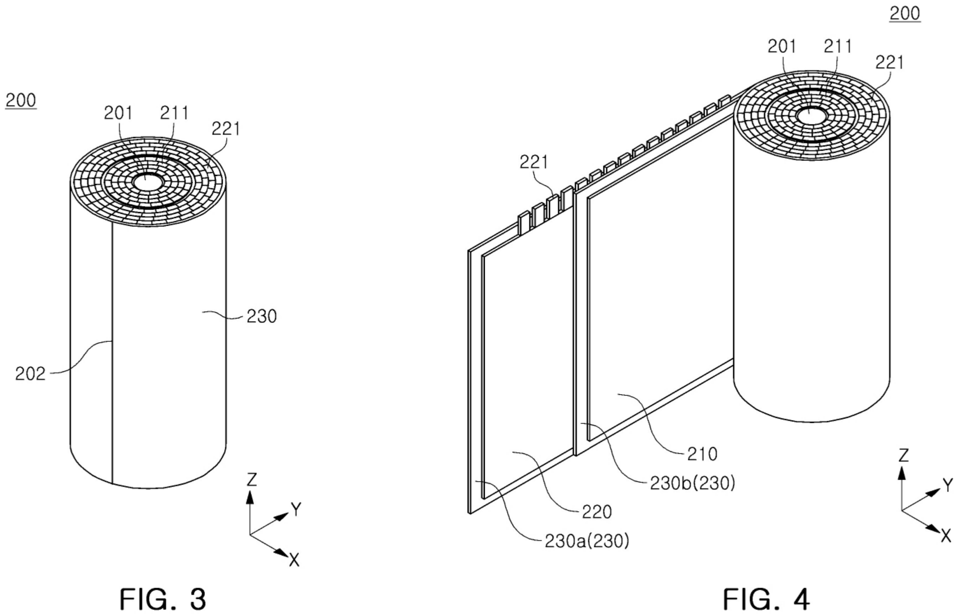

The first current collector plate 130 may electrically connect the electrode assembly 200 and the terminal portion 120. The first current collector plate 130 may be connected to the terminal portion 120 and the first electrode plate (for example, the first electrode plate 210 of FIG. 4). For example, the first current collector plate 130 may be in contact with (for example, welded to) the terminal portion 120 and the first uncoated portion (for example, the first uncoated portion 211 of FIG. 4) of the first electrode plate 210. At least a portion of the first current collector plate 130 may be disposed between the first uncoated portion 211 and the terminal portion 120 of the electrode assembly 200. The first current collector plate 130 may be made of a conductive material.

The second current collector plate 140 may electrically connect the electrode assembly 200 and the can 110. The second current collector plate 140 may be connected to the can 110 and the second electrode plate (for example, the second electrode plate 220 of FIG. 4). For example, the second current collector plate 140 may be in contact with (for example, welded to) the second uncoated portion (for example, the second uncoated portion 221 of FIG. 4) of the second electrode plate 220 and the can 110. At least a portion of the second current collector plate 140 may be disposed between the second uncoated portion 221 of the electrode assembly 200 and the can 110. The second current collector plate 140 may be made of a conductive material. In a preferred embodiment, the second current collector plate 140 may surround at least a portion of the first current collector plate 130. For example, the first current collector plate 130 and the second current collector plate 140 may be disposed on substantially the same plane (for example, the XY plane). The second current collector plate 140 may be formed in a substantially closed curve shape.

The battery cell 100 may further include a sealing gasket 150, an insulator 160, a cap plate 170, and/or a beading gasket 180.

The sealing gasket 150 may seal the gap between the terminal portion 120 and the can 110. At least a portion of the sealing gasket 150 may be disposed between the terminal portion 120 and the can 110 (for example, the end portion 111). The sealing gasket 150 may surround at least a portion of the terminal portion 120. The sealing gasket 150 may prevent leakage of electrolyte inside the battery cell 100. The sealing gasket 150 may also prevent the inflow of foreign substances from outside the battery cell 100. In a preferred embodiment, the sealing gasket 150 may be referred to as a first sealing member or a first gasket.

The insulator 160 may prevent unintended electrical contact between components of the battery cell 100. For example, the insulator 160 may prevent contact between the first current collector plate 130 and the can 110. The insulator 160 may surround at least a portion of the terminal portion 120. At least a portion of the insulator 160 may be disposed between the can 110 (for example, the end portion 111) and the electrode assembly 200. The insulator 160 may be made of an insulating material.

The cap plate 170 may form at least a portion of the appearance of the battery cell 100. The cap plate 170 may seal the opening 114. In a preferred embodiment, the cap plate 170 may, together with the can 110, provide an interior space for accommodating components of the battery cell 100. The cap plate 170 may be joined (for example, welded or crimped) to the wall portion 112 of the can 110. In a preferred embodiment, after the cap plate 170 is welded to the wall portion 112, a portion of the can 110 may be beaded. In a preferred embodiment, the cap plate 170 may support the electrode assembly 200.

The beading gasket 180 may seal the gap between the cap plate 170 and the can 110. The beading gasket 180 may have a substantially closed curved shape. The beading gasket 180 may prevent leakage of electrolytes from within the battery cell 100. The beading gasket 180 may also prevent the inflow of foreign substances from outside the battery cell 100. In a preferred embodiment, the beading gasket 180 may be referred to as a second sealing member or a second gasket.

The electrode assembly 200 may be disposed within the can 110. The electrode assembly 200 may include a first electrode plate (for example, the first electrode plate 210 and the second electrode plate 220 of FIG. 4). The electrode assembly 200 may be connected to current collector plates 130 and 140. The electrode assembly 200 is further described below.

The battery cell 100 may be a tab-less battery cell. For example, the electrode assembly 200 may be electrically connected to the current collector plates 130 and 140 using the uncoated portions 211 and 221 of FIG. 3. For example, the uncoated portions 211 and 221 may be joined (for example, laser welded) to the current collector plates 130 and 140 while at least portions of the uncoated portions 211 and 221 are folded, respectively. The battery cell 100 may not include electrode tabs connecting the uncoated portions 211 and 221 of the electrode assembly 200 and the current collector plates 130 and 140. Since the battery cell 100 of the present disclosure is formed in a tab-less form, the internal resistance of the battery cell 100 may be reduced. In a preferred embodiment, the first uncoated portion 211 may be referred to as the first tab region, and the second uncoated portion 221 may be referred to as the second tab region.

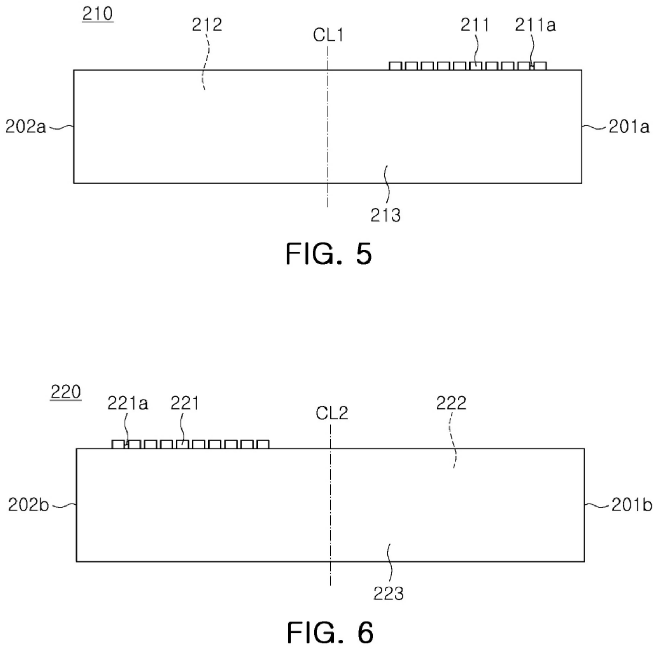

FIG. 3 is a perspective view of an electrode assembly according to a preferred embodiment. FIG. 4 is a perspective view illustrating the interior of an electrode assembly according to a preferred embodiment. FIG. 5 is a front view of a first electrode plate according to a preferred embodiment. FIG. 6 is a front view of a second electrode plate according to a preferred embodiment.

Referring to FIGS. 3 to 6, the electrode assembly 200 may include a first electrode plate 210, a second electrode plate 220, and a separator 230. The description of the electrode assembly 200 of FIG. 2 may be applied to the electrode assembly 200 of FIGS. 3 to 6.

The electrode assembly 200 may be formed in a wound shape. For example, the first electrode plate 210, the second electrode plate 220, and the separator 230 of the electrode assembly 200 may have a rolled shape based on a central portion 201. One ends of the first electrode plate 210, the second electrode plate 220, and/or the separator 230 of the electrode assembly 200 may form the central portion 201, and the other ends thereof may form the edge portion 202. In a preferred embodiment, the central portion 201 may be referred to as a core or a winding core. The edge portion 202 may be referred to as a winding end.

The first electrode plate 210 may include a first current collector 212 and a first mixture layer 213 disposed on at least one surface of the first current collector 212. The first electrode plate 210 may include a first uncoated portion 211 bonded to a first current collector plate (for example, the first current collector plate 130 of FIG. 1). A portion of the first current collector 212 that is not covered by the first mixture layer 213 may be referred to as the first uncoated portion 211. In a preferred embodiment, the first electrode plate 210 may be a cathode plate. The first current collector 212 may be a cathode current collector, and the first mixture layer 213 may be a cathode mixture layer. The first current collector 212 may include stainless steel, nickel, aluminum, titanium, or alloys thereof. The first current collector 212 may also include aluminum or stainless steel surface-treated with carbon, nickel, titanium, or silver. The first mixture layer 213 may include a cathode active material. The cathode active material may include a compound capable of reversibly intercalating and deintercalating lithium ions.

The first uncoated portion 211 may be provided in plural. For example, the first uncoated portion 211 may include a plurality of first uncoated portions 211. At least some of the plurality of first uncoated portions 211 may be folded. The plurality of first uncoated portions 211 may be joined to the first current collector plate 130 in a folded state. The plurality of first uncoated portions 211 may be formed by notching at least a portion of the first current collector 212. For example, the plurality of first uncoated portions 211 may be formed to be spaced apart from each other based on the plurality of first slits 211a.

The second electrode plate 220 may include a second current collector 222 and a second mixture layer 223 disposed on at least one surface of the second current collector 222. The second electrode plate 220 may include a second uncoated portion 221 bonded to the second current collector plate (for example, the second current collector plate 140 of FIG. 1). A portion of the second current collector 222 that is not covered by the second mixture layer 223 may be referred to as the second uncoated portion 221. The second electrode plate 220 may have a different polarity from that of the first electrode plate 210. In a preferred embodiment, the second electrode plate 220 may be an anode plate. The second current collector 222 may be an anode current collector, and the second mixture layer 223 may be an anode mixture layer. The second current collector 222 may include a copper foil, a nickel foil, a stainless steel foil, a titanium foil, a nickel foam, a copper foam, or a polymer substrate coated with a conductive metal. The second mixture layer 223 may include an anode active material. The anode active material may include a material capable of adsorbing and desorbing lithium ions.

The second uncoated portion 221 may be provided in plural. For example, the second uncoated portion 221 may include a plurality of second uncoated portions 221. At least some of the plurality of second uncoated portions 221 may be folded. The plurality of second uncoated portions 221 may be joined to the second current collector plate 140 in a folded state. The plurality of second uncoated portions 221 may be formed by notching at least a portion of the second current collector 222. For example, the plurality of second uncoated portions 221 may be formed to be spaced apart from each other based on a plurality of second slits 221a.

The separator 230 may be interposed between the first electrode plate 210 and the second electrode plate 220. The separator 230 may prevent electrical short-circuiting between the first electrode plate 210 and the second electrode plate 220 and generate ion flow. A plurality of separators 230 may be provided. For example, the separator 230 may include a first separator 230a and a second separator 230b spaced apart from each other.

The first uncoated portion 211 may be surrounded by the second uncoated portion 221. The first electrode plate 210 and the second electrode plate 220 may be formed in a shape such that the first uncoated portion 211 is surrounded by the second uncoated portion 221. The first uncoated portion 211 may be disposed closer to the central portion 201 of the electrode assembly 200 than to the edge portion 202 thereof. For example, the first electrode plate 210 may include a first end portion 201a forming the central portion 201 of the electrode assembly 200 and a second end portion 202a forming the edge portion 202 of the electrode assembly 200. The first uncoated portion 211 may be disposed closer to the first end portion 201a than to the second end portion 202a. The first electrode plate 210 may be wound around the first end portion 201a. For example, in a preferred embodiment, the first uncoated portion 211 may be disposed between the first end portion 201a and a first virtual line CL1 passing through the center of the first electrode plate 210.

The second uncoated portion 221 may be disposed closer to the edge portion 202 of the electrode assembly 200 than to the central portion 201 thereof. For example, the second electrode plate 220 may include a third end portion 201b forming the central portion 201 of the electrode assembly 200 and a fourth end portion 202b forming the edge portion 202 of the electrode assembly 200. The second uncoated portion 221 may be disposed closer to the fourth end portion 202b than to the third end portion 201b. The second electrode plate 220 may be wound around the third end portion 201b. For example, in a preferred embodiment, the second uncoated portion 221 may be disposed between the fourth end portion 202b and a second virtual line CL2 passing through the center of the second electrode plate 220.

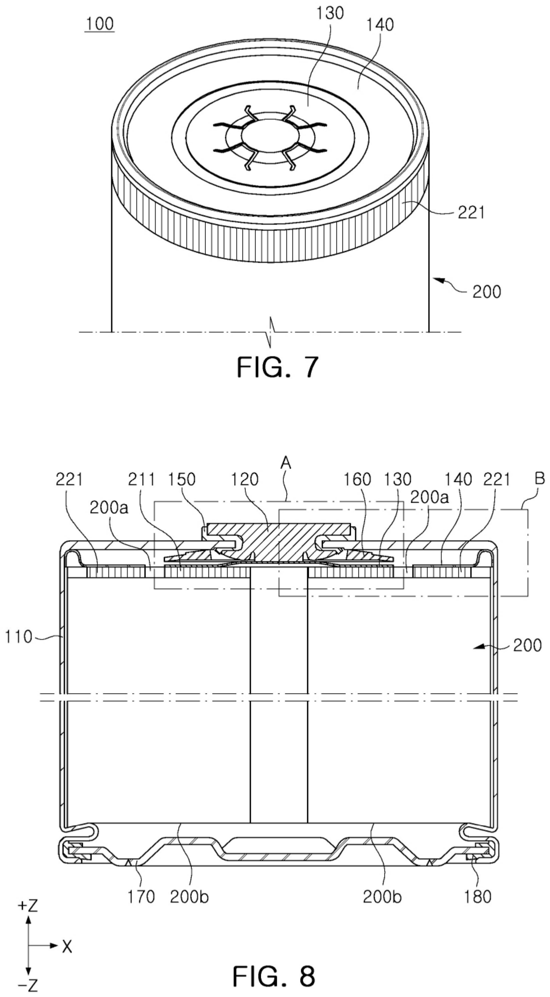

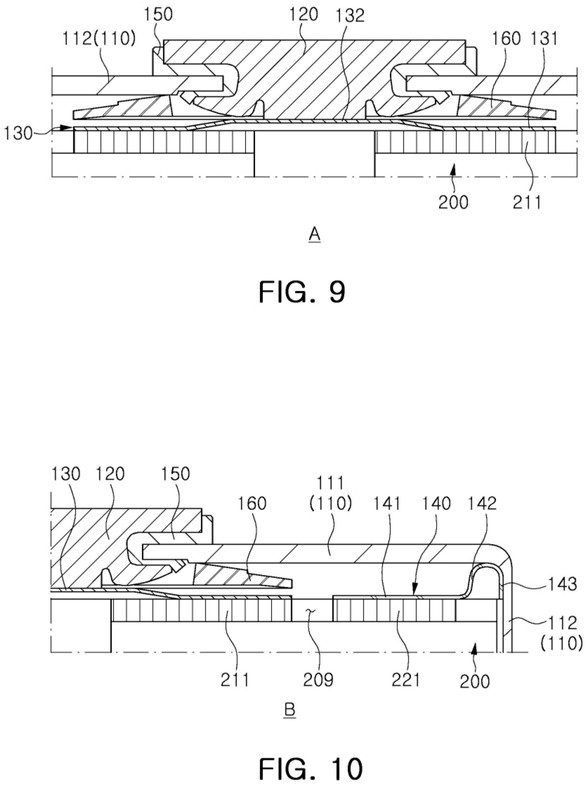

FIG. 7 is a perspective view of a battery cell equipped with a current collector plate, according to a preferred embodiment. FIG. 8 is a cross-sectional view of the battery cell, according to a preferred embodiment. FIG. 9 is an enlarged view of area A of FIG. 8, according to a preferred embodiment. FIG. 10 is an enlarged view of area B of FIG. 8 according to a preferred embodiment.

Referring to FIGS. 7, 8, 9, and/or 10, a battery cell 100 may include a can 110, a terminal portion 120, a first current collector plate 130, a second current collector plate 140, a sealing gasket 150, an insulator 160, a cap plate 170, a beading gasket 180, and an electrode assembly 200. At least some of the descriptions of the battery cell 100, can 110, terminal portion 120, first current collector plate 130, second current collector plate 140, sealing gasket 150, insulator 160, cap plate 170, beading gasket 180, and electrode assembly 200 of FIGS. 1 to 4 may be applied to the battery cell 100, can 110, terminal portion 120, first current collector plate 130, second current collector plate 140, sealing gasket 150, insulator 160, cap plate 170, beading gasket 180, and electrode assembly 200 of FIGS. 7 to 10.

The battery cell 100 may be electrically connected to an external structure (for example, the bus bar 330 of FIG. 11). For example, the terminal portion 120 may be connected to the first uncoated portion 211 of the first electrode plate (for example, the first electrode plate 210 of FIG. 4). The can 110 may be connected to the second uncoated portion 221 of the second electrode plate (for example, the second electrode plate 220 of FIG. 4). The current of the battery cell 100 may flow through the terminal portion 120, the first current collector plate 130, the electrode assembly 200, the second current collector plate 140, and the can 110.

The first uncoated portion 211 may be surrounded by the second uncoated portion 221. For example, the second uncoated portion 221 may be formed in a substantially annular shape, and the first uncoated portion 211 may be disposed within the second uncoated portion 221. The first uncoated portion 211 may be disposed closer to the central portion 201 of the electrode assembly 200 than the second uncoated portion 221. Since the first uncoated portion 211 is surrounded by the second uncoated portion 221, the first uncoated portion 211 and the second uncoated portion 221 may face the same direction. For example, the first uncoated portion 211 and the second uncoated portion 221 may be disposed in the same direction with respect to the mixture layers 213 and 223. The first uncoated portion 211 and the second uncoated portion 221 may face the same direction. The first uncoated portion 211 and the second uncoated portion 221 may be disposed between the end portion 111 of the can 110 and the mixture layers 213 and 223 of the electrode assembly 200. For example, the first uncoated portion 211 may face in a first direction (for example, +Z direction) toward the terminal portion 120. The second uncoated portion 221 may face in the first direction (+Z direction).

By facing the first uncoated portion 211 and the second uncoated portion 221 in the same direction, the electrolyte impregnation performance of the electrode assembly 200 may be improved. For example, uncoated portions 211 and 221 may be disposed on one side of the electrode assembly 200, and uncoated portions 211 and 221 may not be disposed on the other side. By not positioning the uncoated portions 211 and 221 on the other side of the electrode assembly 200, electrolyte blocking by the uncoated portions 211 and 221 may be prevented. The electrolyte may be impregnated into the electrode assembly 200 using the other side of the electrode assembly 200 where the uncoated portions 211 and 221 are not disposed. Through the first uncoated portion 211 and the second uncoated portion 221 facing the same direction, the length of the current path of the battery cell 100 may be reduced, and unnecessary internal resistance of the battery cell 100 may be reduced.

At least a portion of the first current collector plate 130 may be surrounded by the second current collector plate 140. Since the first current collector plate 130 is surrounded by the second current collector plate 140, the first current collector plate 130 and the second current collector plate 140 may face the same direction. For example, the first current collector plate 130 and the second current collector plate 140 may be disposed in the same direction with respect to the electrode assembly 200. The first current collector plate 130 and the second current collector plate 140 may be disposed between the end portion 111 of the can 110 and the electrode assembly 200. Since the first current collector plate 130 and the second current collector plate 140 are disposed in the same direction with respect to the electrode assembly 200, the length of the current path of the battery cell 100 may be reduced, and unnecessary internal resistance of the battery cell 100 may be reduced. For example, since the first current collector plate 130 and the second current collector plate 140 are disposed in the same direction with respect to the electrode assembly 200, the second current collector plate 140 may be joined to the end portion 111 within a specified distance, and the amount of current flowing through the wall portion 112 of the can 110 may be reduced. The second current collector plate 140 may be electrically separated from the first current collector plate 130. The first current collector plate 130 may be spaced apart from the second current collector plate 140.

The first uncoated portion 211 may be spaced apart from the second uncoated portion 221. For example, in a preferred embodiment, the battery cell 100 may include a recess 209 disposed between the first uncoated portion 211 and the second uncoated portion 221. The recess 209 may be an empty space. The recess 209 may be formed in a ring shape. In a preferred embodiment (not illustrated), the recess 209 may be replaced with an insulating member.

The first current collector plate 130 may electrically connect the first electrode plate (for example, the first electrode plate 210 of FIG. 4) and the terminal portion 120. For example, the first current collector plate 130 may include a border region 131 bonded (for example, ultrasonically welded) to the first uncoated portion 211 and a protruding region 132 bonded to the terminal portion 120. The protruding region 132 may protrude in the first direction (+Z direction) from the border region 131.

The second current collector plate 140 may electrically connect the second electrode plate (for example, the second electrode plate 220 of FIG. 4) and the can 110. For example, the second current collector plate 140 may include a first joining region 141 bonded to the second uncoated portion 221 of the second electrode plate 220 and a second joining region 143 bonded to the can 110. The second joining region 143 may be disposed adjacent to the end portion 111 of the can 110. For example, the second joining region 143 may be joined to the end portion 111 of the can 110 or to a wall portion 112 located within a specified distance (for example, 10 mm) from the end portion 111 of the can 110. By positioning the second joining region 143 adjacent to the end portion 111 of the can 110, the current path length may be reduced.

The second current collector plate 140 may be formed in a shape that enhances the convenience of assembly with the can 110. For example, the second current collector plate 140 may include a bend region 142 protruding toward the end portion 111. The bend region 142 may be located between the first joining region 141 and the second joining region 143. When the second current collector plate 140 is inserted into the can 110, the bend region 142 may be compressed. The bend region 142 may be closer to the second joining region 143 than to the first joining region 141. By being compressed by the bend region 142 of the second current collector plate 140, the convenience of insertion of the second current collector plate 140 into the can 110 may be improved.

The electrode assembly 200 may have an open shape on one side. For example, the electrode assembly 200 may include a top portion 200a where a first uncoated portion 211 and a second uncoated portion 221 are located, and a bottom portion 200b opposite the top portion 200a. The top portion 200a may face the end portion 111 of the can 110. The bottom portion 200b may face the cap plate 170. The bottom portion 200b may not be covered by the uncoated portions 211 and 221. By not covering the bottom portion 200b by the uncoated portions 211 and 221, the convenience of electrolyte injection with the electrode assembly 200 may be increased.

FIG. 11 is an exploded perspective view of a battery module.

Referring to FIG. 11, a battery module 300 may include a cell assembly 101 including a plurality of battery cells 100, a module housing 310 that accommodates the cell assemblies 101, and a bus bar 330 connected to the plurality of battery cells 100. The description of the battery cells 100 described above (for example, in FIGS. 1 and 2) may be applied to the battery cells 100 of FIG. 11.

The module housing 310 may accommodate components of the battery module 300, such as the cell assemblies 101. In a preferred embodiment, the module housing 310 may include a bottom member that supports the cell assemblies 101, and a sidewall extending from the bottom member and surrounding the cell assemblies 101.

In a preferred embodiment, the battery module 300 may include a module cover 320 covering the cell assembly 101. The module cover 320 may be coupled to the module housing 310 to form at least a portion of the appearance of the battery module 300.

The battery module 300 may include a bus bar 330 electrically connected to the cell assembly 101. In a preferred embodiment, the bus bar 330 may be connected to a terminal portion (for example, the terminal portion 120 of FIG. 2) of the battery cell 100 and the can 110. The bus bar 330 may further include a terminal (not illustrated) for transmitting current from the battery module 300 to the exterior of the battery module 300.

The shapes of the module housing 310, module cover 320, and/or bus bar 330 described in FIG. 11 are illustrative.

As set forth above, according to a preferred embodiment, the resistance value of a battery cell may be reduced.

According to a preferred embodiment, the electrolyte impregnation efficiency of the battery cell may be improved.

According to a preferred embodiment, the convenience of battery cell assembly may be increased.

(Aspect 1) A battery cell comprising: a can; an electrode assembly disposed within the can, and including a first electrode plate and a second electrode plate; a terminal portion mounted on the can; a first current collector plate connected to the terminal portion and the first electrode plate; and a second current collector plate connected to the can and the second electrode plate, wherein the first electrode plate includes a first uncoated portion bonded to the first current collector plate, the second electrode plate includes a second uncoated portion bonded to the second current collector plate, and the first uncoated portion is surrounded by the second uncoated portion.

(Aspect 2) The battery cell of aspect 1, wherein the first current collector plate and the second current collector plate are positioned in the same direction with respect to the electrode assembly.

(Aspect 3) The battery cell of aspect 1 or 2, wherein the first electrode plate includes a first end portion forming a central portion of the electrode assembly and a second end portion forming an edge portion of the electrode assembly, the second electrode plate includes a third end portion forming the central portion and a fourth end portion forming the edge portion, the first uncoated portion is closer to the first end portion than the second end portion, and the second uncoated portion is closer to the fourth end portion than to the third end portion.

(Aspect 4) The battery cell of any one of aspects 1 to 3, wherein at least a portion of the first current collector plate is surrounded by the second current collector plate.

(Aspect 5) The battery cell of any one of aspects 1 to 4, wherein the can includes an end portion accommodating the terminal portion and a wall portion extending from the end portion.

(Aspect 6) The battery cell of aspect 5, wherein the second current collector plate includes a first joining region joined to the second uncoated portion and a second joining region joined to the can,

wherein the second joining region is located within a specified distance from the end portion of the can.

(Aspect 7) The battery cell of aspect 6, wherein the second current collector plate includes a bend region protruding toward the end portion of the can and disposed between the first joining region and the second joining region.

(Aspect 8) The battery cell of aspect 6 or 7, wherein the wall portion includes a first end region connected to the end portion of the can and a second end region opposite the first end region and forming an opening, and the battery cell further includes a cap plate sealing the opening.

(Aspect 9) The battery cell of aspect 8, wherein the electrode assembly includes a top portion in which the first uncoated portion and the second uncoated portion are positioned and which faces the end portion of the can, and a bottom portion opposite the top portion and facing the cap plate.

(Aspect 10) The battery cell of any one of aspects 1 to 9, further comprising a sealing gasket sealing a gap between the terminal portion and the can.

(Aspect 11) The battery cell of any one of aspects 1 to 10, wherein the first uncoated portion includes a plurality of first uncoated portions, the plurality of first uncoated portions being joined to the first current collector plate in a folded state, and the second uncoated portion includes a plurality of second uncoated portions, the plurality of second uncoated portions being joined to the second current collector plate in a folded state.

(Aspect 12) The battery cell of any one of aspects 1 to 11, further comprising an insulator surrounding at least a portion of the terminal portion and at least partially disposed between the first current collector plate and the can.

(Aspect 13) The battery cell of any one of aspects 1 to 12, wherein the first current collector plate includes a border region bonded to the first uncoated portion and a protruding region bonded to the terminal portion.

(Aspect 14) The battery cell of any one of aspects 1 to 13, wherein the first uncoated portion and the second uncoated portion are disposed between an end portion of the can and a mixture layer of the electrode assembly.

(Aspect 15) A battery module comprising: a cell assembly including a plurality of battery cells; a module housing accommodating the cell assembly; and a bus bar electrically connected to the plurality of battery cells, wherein each of the plurality of battery cells includes, a can; an electrode assembly disposed within the can, and including a first electrode plate and a second electrode plate; a terminal portion mounted on the can; a first current collector plate connected to the terminal portion and the first electrode plate; and a second current collector plate connected to the can and the second electrode plate, the first electrode plate includes a first uncoated portion connected to the first current collector plate, the second electrode plate includes a second uncoated portion connected to the second current collector plate, and the first uncoated portion is surrounded by the second uncoated portion.

## Claims

1. A battery cell comprising:
a can;
an electrode assembly disposed within the can, and including a first electrode plate and a second electrode plate;
a terminal portion mounted on the can;
a first current collector plate connected to the terminal portion and the first electrode plate; and
a second current collector plate connected to the can and the second electrode plate,
wherein the first electrode plate includes a first uncoated portion bonded to the first current collector plate,
the second electrode plate includes a second uncoated portion bonded to the second current collector plate, and
the first uncoated portion is surrounded by the second uncoated portion.

2. The battery cell of claim 1, wherein the first current collector plate and the second current collector plate are positioned in the same direction with respect to the electrode assembly.

3. The battery cell of claim 1 or 2, wherein the first electrode plate includes a first end portion forming a central portion of the electrode assembly and a second end portion forming an edge portion of the electrode assembly,
the second electrode plate includes a third end portion forming the central portion and a fourth end portion forming the edge portion,
the first uncoated portion is closer to the first end portion than the second end portion, and
the second uncoated portion is closer to the fourth end portion than to the third end portion.

4. The battery cell of any one of claims 1 to 3, wherein at least a portion of the first current collector plate is surrounded by the second current collector plate.

5. The battery cell of any one of claims 1 to 4, wherein the can includes an end portion accommodating the terminal portion and a wall portion extending from the end portion.

6. The battery cell of claim 5, wherein the second current collector plate includes a first joining region joined to the second uncoated portion and a second joining region joined to the can,
wherein the second joining region is located within a specified distance from the end portion of the can.

7. The battery cell of claim 6, wherein the second current collector plate includes a bend region protruding toward the end portion of the can and disposed between the first joining region and the second joining region.

8. The battery cell of claim 6 or 7, wherein the wall portion includes a first end region connected to the end portion of the can and a second end region opposite the first end region and forming an opening, and
the battery cell further includes a cap plate sealing the opening.

9. The battery cell of claim 8, wherein the electrode assembly includes a top portion in which the first uncoated portion and the second uncoated portion are positioned and which faces the end portion of the can, and a bottom portion opposite the top portion and facing the cap plate.

10. The battery cell of any one of claims 1 to 9, further comprising a sealing gasket sealing a gap between the terminal portion and the can.

11. The battery cell of any one of claims 1 to 10, wherein the first uncoated portion includes a plurality of first uncoated portions, the plurality of first uncoated portions being joined to the first current collector plate in a folded state, and
the second uncoated portion includes a plurality of second uncoated portions, the plurality of second uncoated portions being joined to the second current collector plate in a folded state.

12. The battery cell of any one of claims 1 to 11, further comprising an insulator surrounding at least a portion of the terminal portion and at least partially disposed between the first current collector plate and the can.

13. The battery cell of any one of claims 1 to 12, wherein the first current collector plate includes a border region bonded to the first uncoated portion and a protruding region bonded to the terminal portion.

14. The battery cell of any one of claims 1 to 13, wherein the first uncoated portion and the second uncoated portion are disposed between an end portion of the can and a mixture layer of the electrode assembly.

15. A battery module comprising:
a cell assembly including a plurality of battery cells;
a module housing accommodating the cell assembly; and
a bus bar electrically connected to the plurality of battery cells,
wherein each of the plurality of battery cells includes,
a can;
an electrode assembly disposed within the can, and including a first electrode plate and a second electrode plate;
a terminal portion mounted on the can;
a first current collector plate connected to the terminal portion and the first electrode plate; and
a second current collector plate connected to the can and the second electrode plate,
the first electrode plate includes a first uncoated portion connected to the first current collector plate,
the second electrode plate includes a second uncoated portion connected to the second current collector plate, and
the first uncoated portion is surrounded by the second uncoated portion.
